# FASCICULE DE BREVET EUROPEEN

(11) **EP 1 648 839 B1**
(45) Date de publication et mention de la délivrance du brevet: **28.11.2012**
(21) Numéro de dépôt: 04767872.7
(22) Date de dépôt: 05.07.2004
(51) Int. Cl.: C03C 3/32, C03C 4/10, C03C 10/16, C03C 10/02

(54) **COMPOSITIONS VITREUSES, DE TYPE VITROCERAMIQUE, TRANSPARENTES DANS L INFRAROUGE**
INFRAROTTRANSPARENTE GLASARTIGE ZUSAMMENSETZUNG VOM GLASKERAMIKTYP
VITREOUS COMPOSITIONS OF THE VITROCERAMIC TYPE, TRANSPARENT TO INFRARED

(30) Priorité: 07.07.2003 FR 0308298
(43) Date de publication de la demande: 26.04.2006
(73) Titulaire: CENTRE NATIONAL DE LA RECHERCHE SCIENTIFIQUE (CNRS), 75794 Paris Cedex 16 (FR); Universite Rennes 1, 35065 Rennes (FR)
(72) Inventeur: ZHANG, Xianghua, F-35510 Cesson-Sevigne (FR); LUCAS, Jacques, F-35830 Betton (FR); MA, Hongli, F-35510 Cesson-Sevigne (FR); ADAM, Jean-Luc, F-35700 Rennes (FR)
(74) Mandataire: Desaix, Anne
(86) Numéro de dépôt international: PCT/FR2004/050311
(87) Numéro de publication internationale: WO 2005/005334

(56) Documents cités:
- US-A- 5 389 584
- H.L. MA ET AL: "Ga-Ge-Sb-Se based glasses and influence of alkaline halide addition" JOURNAL OF NON-CRYSTALLINE SOLIDS, vol. 256&257, 1999, pages 165-169, XP002274089

## Description

L'invention a pour objet des compositions vitreuses, notamment de type vitrocéramique, transparentes dans l'infrarouge, leurs procédés d'obtention et leurs utilisations.

Plus précisément, la présente invention vise à proposer un matériau capable d'assurer la transmission des rayonnements infrarouges, c'est-à-dire possédant une transparence dans les longueurs d'ondes allant de 0,7 à 14 µm et en particulier allant de 0,7 à 11 µm ou de 0,9 à 14 µm. De tels matériaux sont utilisés dans le domaine de l'imagerie thermique, et en particulier pour la fabrication de composants optiques pour des systèmes infrarouges, comme par exemple les imageurs thermiques.

Aujourd'hui, le germanium monocristallin compose la plupart des optiques de caméras infrarouges. Malheureusement, il s'agit d'un matériau rare, cher et dont la mise en forme est longue et onéreuse.

Plus récemment, des verres transparents dans l'infrarouge ont été proposés à titre d'alternative au germanium monocristallin par exemple US-A-5, 389, 584 et WP 2274089 (H.L.Ma). A titre représentatif de ceux-ci on peut citer les verres de chalcogénures, en particulier les compositions vitreuses à base de gallium, de germanium et d'antimoine, et plus particulièrement celles décrites dans le brevet EP 1 034 145. Toutefois, bien que donnant satisfaction en termes de transparence dans l'infrarouge et de coût, de tels verres possèdent généralement une résistance limitée aux chocs mécaniques et thermiques.

On sait par ailleurs obtenir à partir de certains verres, des matériaux de type vitrocéramique combinant des avantages des céramiques (dureté élevée, bonnes propriétés mécaniques, faible dilatation thermique) et des avantages des verres (facilité de fabrication, mise en forme). Ces matériaux sont obtenus à l'issu d'un traitement thermique de certaines compositions vitreuses de manière à induire leur cristallisation partielle. Ainsi, des vitrocéramiques à base d'oxydes, dont les constituants principaux sont généralement SiO₂ et/ou Al₂O₃, sont déjà décrites dans les documents US 4 835 121 et US 2002/0022564. Toutefois, ces vitrocéramiques ne sont pas transparentes dans l'infrarouge pour des longueurs d'ondes supérieures à 4 µm maximum, ce qui est insuffisant pour un grand nombre d'applications.

Enfin, il existe également des céramiques transparentes aux infrarouges, à base de nanocristaux de ZnS ou ZnSe. Malheureusement, l'élaboration et la mise en forme de ces céramiques sont complexes.

En conséquence, il demeure à ce jour un besoin pour un matériau permettant de donner simultanément satisfaction à l'ensemble des exigences précitées à savoir, transparence dans l'infrarouge, notamment dans les longueurs d'onde comprises entre 0,7 et 14 µm, faible coût et bonnes propriétés thermomécaniques.

De manière surprenante, les inventeurs ont découvert qu'il était possible d'obtenir des vitrocéramiques de type chalcogénures manifestant une transparence dans l'infrarouge.

Plus précisément l'invention concerne principalement une composition de type vitrocéramique comportant des cristaux et contenant, en % molaire :

| | |
|---|---|
| Ge | 5-40 |
| Ga | < 1 |
| S+Se | 40-85 |
| Sb + As | 4-40 |
| MX | 2-25 |
| Ln | 0-6 |
| Adjuvant | 0-30 |

dans laquelle :
- M représente au moins Zn ou un métal alcalin, notamment choisi parmi Rb, Cs, Na et,
- X représente au moins un atome de chlore, brome ou iode,
- Ln représente au moins une terre rare, et
- Adjuvant représente au moins un additif constitué par au moins un métal et/ou au moins un sel métallique,
avec la somme de l'ensemble des pourcentages molaires des composants présents dans ladite composition étant égale à 100.

Selon une variante particulière, la teneur en antimoine et/ou arsenic peut varier de 5 à 40 % molaire.

Selon une variante privilégiée de l'invention, cette composition est une vitrocéramique transparente dans l'infrarouge, notamment dans les longueurs d'onde allant de 0,7 à 14 µm et en particulier allant de 0,7 à 11 µm ou de 0,9 à 14 µm. En l'occurrence, la transparence de ces compositions vitrocéramiques peut notamment être ajustée en fonction notamment de la nature de leurs composants à l'une des plages allant de 0,7 à 11 µm ou de 0,9 à 14 µm.

Avantageusement, les compositions vitrocéramiques selon l'invention, s'avèrent donc transparentes dans les plages d'utilisation couramment retenues pour les imageurs thermiques, c'est-à-dire les plages de longueurs d'ondes allant de 3 à 5 µm et de 8 à 12 µm.

Dans certains cas, il peut être noté des pertes optiques, dues aux cristaux contenus dans la composition, dans les courtes longueurs d'ondes, typiquement allant de 0,6 à 2 µm. Cependant, ils n'ont aucune influence significative dans les gammes de longueurs d'ondes allant de 3 à 5 µm et de 8 à 12 µm.

Lesdites compositions vitrocéramiques selon l'invention peuvent être obtenues par traitement thermique spécifique de compositions vitreuses de même composition mais exemptes de cristaux, dites encore non cristallines.

Au sens de la présente invention, une composition vitreuse est considérée non cristalline à partir du moment où elle ne diffracte pas aux rayons X et que l'observation au microscope électronique ne révèle pas de cristaux.

Ces compositions vitreuses, i.e. non cristallines, constituent un autre objet de l'invention. De par leur composition, elles permettent avantageusement d'obtenir, via un traitement thermique approprié, une nucléation et une croissance cristalline contrôlées de manière à être compatibles avec une application en infrarouge et à conférer aux compositions vitrocéramiques correspondantes les propriétés mécaniques et thermiques attendues.

Ainsi, le traitement thermique approprié appliqué à ces compositions vitreuses est tel qu'il permet de générer des cristaux, observables au microscope électronique, d'une taille inférieure à 1 µm dans la vitrocéramique ainsi obtenue.

Ces cristaux possèdent, d'une manière générale, une taille inférieure à 1 µm, notamment inférieure ou égale à 500 nm, en particulier inférieure ou égale à 400 nm, voire inférieure ou égale à 300 nm.

Ils peuvent présenter une taille supérieure ou égale à 1 nm, notamment supérieure ou égale à 2 nm, en particulier supérieure ou égale à 5 nm, voire supérieure ou égale à 10 nm.

Plus particulièrement ces cristaux présentent une taille variant 10 à 300 nm, et notamment de 50 à 300 nm.

La taille et la distribution des cristaux peuvent être constatées par observation au microscope électronique.

En particulier, les vitrocéramiques de chalcogénures selon l'invention peuvent comprendre au moins 0,1 % de volume cristallisé avec des cristaux de taille inférieure ou égale à 1 µm et notamment inférieure ou égale à 400 µm. Toutefois, il est clair que cette quantité volumique de cristaux peut être modulée et notamment augmentée, en fonction des applications envisagées. A titre d'exemple, pour l'amplification optique, 0,1 % d'ions de terres rares cristallisés peut être largement suffisant. En revanche, un taux de volume cristallisé supérieur à 10 %, 40 %, voire plus, sera pour sa part plus particulièrement intéressant pour diminuer le coefficient de dilatation d'un matériau composite.

Ces valeurs de pourcentage de volume cristallisé peuvent être constatées par observation au microscope électronique.

Selon une variante particulière, les compositions selon l'invention comprennent du gallium en une teneur inférieure ou égale à 0,75 % molaire, notamment en une teneur inférieure ou égale à 0,5 % molaire, en particulier en une teneur inférieure ou égale à 0,25 % molaire, voire en une teneur inférieure ou égale à 0,1 % molaire.

Plus particulièrement, les compositions selon l'invention sont exemptes de gallium. On entend par "exempte de gallium" une teneur au maximum égale à la teneur de gallium contenu comme impureté dans les autres composants.

Les compositions selon l'invention comprennent du germanium en une teneur pouvant en particulier varier de 10 à 35 % molaire.

De même, elles comprennent du soufre et/ou du sélénium en une teneur pouvant varier notamment de 45 à 75 % molaire, et en particulier de 50 à 75 % molaire.

Les compositions selon l'invention comprennent de l'antimoine et/ou de l'arsenic en une teneur pouvant varier notamment de 4 à 25 % molaire, et en particulier de 8 à 20 % molaire.

En ce qui concerne le composé MX, il est plus particulièrement choisi parmi CsCl, CsBr, CsI, NaCl, NaBr, NaI, KCl, KBr, KI, RbCl, RbBr, RbI, ZnCl₂, ZnBr₂ et ZnI₂ et notamment parmi ZnCl₂, CsCl, CsBr, CsI et leurs mélanges. Ce composé MX est généralement présent en une teneur variant en particulier de 2 à 15 % molaire.

En ce qui concerne le composant terre rare, Ln, de la composition selon l'invention, il peut être plus particulièrement choisi parmi Dy, Er, Nd, Pr, Yb, Tm, Ho et leurs mélanges. Il est généralement présent en une teneur variant en particulier de 0 à 3 % molaire.

Bien entendu, les compositions selon l'invention sont susceptibles de comprendre un ou plusieurs adjuvants. Comme précisé précédemment, il peut s'agir d'un métal, d'un sel métallique ou de leurs mélanges.

Selon une variante particulière de l'invention, ces adjuvants peuvent être choisis parmi le calcium, le baryum, l'indium, le tellure, l'argent, le cuivre, le plomb, le cadmium, leurs sels, comme par exemple PbI₂, CuI, et leurs dérivés comme par exemple Ag₂Se et CdTe, et leurs mélanges.

Ces adjuvants sont généralement présents en particulier à raison de 0 à 10 % molaire.

Selon une variante particulière, les compositions selon l'invention sont un mélange quaternaire de germanium en une teneur variant de 15 à 30 % molaire, d'antimoine en une teneur variant de 4 à 20 % molaire, de sélénium en une teneur variant de 50 à 70 % molaire et d'halogénure de césium, tel que CsCl, CsBr ou CsI, en une teneur variant de 3 à 15 % molaire.

Selon une autre variante particulière, les compositions selon l'invention sont un mélange quaternaire de germanium en une teneur variant de 15 à 20 % molaire, d'antimoine en une teneur variant de 10 à 15 % molaire, de soufre en une teneur variant de 45 à 65 % molaire et d'halogénure de césium, tel que CsCl, CsBr ou CsI, en une teneur variant de 2 à 15 % molaire.

Selon encore une autre variante particulière, les compositions selon l'invention sont un mélange à cinq composants, de germanium en une teneur allant de 10 à 25 % molaire, d'antimoine en une teneur allant de 10 à 25 % molaire, de sélénium en une teneur allant de 55 à 65 % molaire, d'halogénure de césium, tel que CsCl, CsBr ou CsI en une teneur allant de 2 à 5 % molaire, et d'un adjuvant choisi parmi PbI₂, CuI, Ag₂Se et CdTe en une teneur allant de 1 à 7 % molaire.

Comme précisé plus haut, la composition vitrocéramique peut être obtenue à l'issu d'un traitement thermique d'une composition vitreuse selon l'invention. Ce traitement thermique peut durer d'une heure à un mois, voire plus, et doit être réalisé à une température supérieure à la température de transition vitreuse (Tg) de la composition vitreuse, de manière à générer des cristaux en nombre et en taille compatible avec une transparence dans l'infrarouge, notamment dans les longueurs d'ondes allant de 0,7 à 14 µm et en particulier allant de 0,7 à 11 µm ou de 0,9 à 14 µm.

En ce qui concerne ces compositions vitreuses non-cristallines (ou non vitrocéramique) selon l'invention elles peuvent être obtenues par un procédé d'obtention comprenant notamment les étapes consistant à :
- introduire le germanium, le gallium, le soufre et/ou le sélénium, l'antimoine et/ou l'arsenic, Ln et l'adjuvant dans les proportions souhaitées dans un tube de silice, notamment,
- pomper sous vide, par exemple jusqu'à 10⁻⁴ mbar, et sceller lesdits tubes de silice,
- porter lesdits tubes à des températures variant de 700 à 1000 °C,
- homogénéiser le mélange à cette température pendant une durée comprise entre 1 à 10 heures,
- refroidir rapidement jusqu'à une température de 20 à 30 °C en dessous de la température de transition vitreuse dudit mélange, et
- refroidir lentement ledit mélange jusqu'à température ambiante.

Ce procédé de fabrication de composition vitreuse selon l'invention peut comprendre en outre une étape de purification consistant à ajouter au maximum 500 ppm d'au moins un capteur d'oxygène, tel que par exemple l'aluminium, le magnésium ou leurs mélanges, avant distillation sous vide de ladite composition vitreuse.

Les vitrocéramiques selon l'invention peuvent être utilisées dans un système infrarouge, et notamment pour fabriquer des optiques pour tout système infrarouge, fonctionnant notamment de 0,7 à 14 µm et en particulier allant de 0,7 à 11 µm ou de 0,9 à 14 µm, et en particulier de 3 à 5 µm et/ou de 8 à 12 µm. Dans le cas où elles contiennent des terres rares, elles peuvent également être utilisées pour l'amplification optique.

### Figure :

La figure 1 est une photographie à un grossissement x 20 000 de la vitrocéramique de chalcogénures dont la composition est décrite dans l'exemple 3.

Les exemples suivants sont donnés à titre illustratif et nullement limitatif de l'invention.

### Exemples :

Les exemples 1 à 47 présentés ci-après rendent compte de 47 compositions de type vitrocéramiques conformes à l'invention.

En opérant comme indiqué ci-dessus, on prépare dans un premier temps des compositions vitreuses ayant les compositions précisées ci-après.

Pour la fabrication des vitrocéramiques correspondantes, ces compositions vitreuses sont chauffées jusqu'à une température supérieure à leur température de transition vitreuse (Tg), durant une période plus ou moins longue en fonction de la taille et de la quantité de cristaux désirées.

A titre d'exemple, pour la composition vitreuse n°3, de Tg = 260°C, le recuit est effectué à 290°C pendant une durée variant typiquement de 1 heure à 1 mois qui permet de contrôler la quantité de cristaux.

La vitrocéramique ainsi obtenue est illustrée par la figure 1.

| Exemples | Ge | Sb | Se | CsCl | |
|---|---|---|---|---|---|
| 1 | 26,3 | 6,0 | 60,5 | 7,2 | |
| 2 | 24,3 | 12,5 | 58,4 | 4,7 | |
| 3 | 23,3 | 11,7 | 56 | 9,0 | |
| 4 | 23,9 | 4,8 | 66,8 | 4,5 | |
| 5 | 21,8 | 8,7 | 56,7 | 12,7 | |
| 6 | 19,9 | 12,4 | 60,3 | 4,9 | |
| | | | | | |

| Exemples | Ge | Sb | Se | CsBr | |
|---|---|---|---|---|---|
| 7 | 24,6 | 12,4 | 59,2 | 3,7 | |
| 8 | 23,8 | 12,0 | 57,2 | 7 | |
| 9 | 22,9 | 11,6 | 55,1 | 10,5 | |
| 10 | 23,2 | 9,3 | 60,4 | 7,1 | |
| 11 | 22,4 | 9,0 | 58,3 | 10,3 | |
| 12 | 25,1 | 5,8 | 65,5 | 3,6 | |
| 13 | 24,8 | 10,2 | 61,3 | 3,8 | |
| | | | | | |

| Exemples | Ge | Sb | Se | CsI | |
|---|---|---|---|---|---|
| 14 | 24 | 12,4 | 57,5 | 6,0 | |
| 15 | 23,3 | 11,8 | 56,1 | 8,8 | |
| 16 | 24,6 | 5,6 | 64,0 | 5,8 | |
| 17 | 22,8 | 9,1 | 59,4 | 8,6 | |
| 18 | 24,8 | 10,8 | 61,4 | 3,1 | |
| 19 | 19,9 | 16,3 | 60,7 | 3,1 | |
| | | | | | |

| Exemples | Gc | Sb | S | CsCl | |
|---|---|---|---|---|---|
| 20 | 18,8 | 14,1 | 61,1 | 6 | |
| 21 | 18,3 | 13,7 | 59,3 | 8,7 | |
| 22 | 17,3 | 12,9 | 56,1 | 13,7 | |
| 23 | 16,8 | 12,6 | 54,6 | 16 | |
| | | | | | |

| Exemples | Ge | Sb | S | CsBr | |
|---|---|---|---|---|---|
| 24 | 19,5 | 14,6 | 63,4 | 2,5 | |
| 25 | 18,6 | 13,9 | 60,4 | 7,0 | |
| | | | | | |

| Exemples | Gc | Sb | S | CsI | |
|---|---|---|---|---|---|
| 26 | 19,2 | 14,4 | 62,4 | 4,0 | |
| 27 | 18,5 | 13,9 | 60,0 | 7,6 | |
| 28 | 16,0 | 12,0 | 52,1 | 6,6 | |
| 29 | 15,4 | 11,5 | 49,9 | 6,3 | |
| | | | | | |

| Exemples | Ge | Sb | Se | PbI₂ | CsI |
|---|---|---|---|---|---|
| 30 | 21,9 | 12,9 | 60,3 | 2,5 | 2,4 |
| 31 | 15,1 | 18,3 | 58,3 | 6,2 | 2,1 |
| 32 | 17,1 | 17,2 | 60,9 | 2,8 | 2 |
| 33 | 13,4 | 20,9 | 60,9 | 2,7 | 2,1 |
| 34 | 20,2 | 14,3 | 61,8 | 1,5 | 2,2 |
| | | | | | |

| Exemples | Ge | Sb | Sc | CuI | CsBr |
|---|---|---|---|---|---|
| 35 | 19,3 | 12,9 | 59,7 | 6 | 2,1 |
| 36 | 21,2 | 11,8 | 61,6 | 3,1 | 2,3 |
| 37 | 16,2 | 17,3 | 60,1 | 4,2 | 2,2 |
| 38 | 11,8 | 23,2 | 60,5 | 2,5 | 2 |
| 39 | 17,4 | 15,8 | 59,2 | 5,1 | 2,5 |
| | | | | | |

| Exemples | Gc | Sb | Se | Ag₂Se | CsCl |
|---|---|---|---|---|---|
| 40 | 16,2 | 18 | 60,3 | 3,5 | 2 |
| 41 | 21,2 | 12 | 61,7 | 3 | 2,1 |
| 42 | 12 | 22,6 | 60,9 | 2,5 | 2 |
| 43 | 21,7 | 13,2 | 60,5 | 2,4 | 2,2 |

| Exemples | Ge | Sb | Se | CdTe | CsI |
|---|---|---|---|---|---|
| 44 | 16,8 | 17,9 | 61,2 | 2,1 | 2 |
| 45 | 21,5 | 12,1 | 61,2 | 3 | 2,2 |
| 46 | 19 | 15,7 | 61,9 | 1,4 | 2 |
| 47 | 17,3 | 17,1 | 61 | 2,5 | 2,1 |

Les intervalles doivent être compris bornes incluses, sauf spécifications contraires.

## Revendications

1. Composition de type vitrocéramique comportant des cristaux et comprenant, en % molaire :
| | |
|---|---|
| Ge | 5-40 |
| Ga | <1 |
| S+Se | 40-85 |
| Sb+As | 4-40 |
| MX | 2-25 |
| Ln | 0-6 |
| Adjuvant | 0-30 |
dans laquelle :
- M représente au moins Zn ou un métal alcalin choisi parmi Rb, Cs, Na et K,
- X représente au moins un atome de chlore, brome ou iode,
- Ln représente au moins une terre rare,
- Adjuvant représente au moins un additif constitué par au moins un métal et/ou au moins un sel métallique,
avec la somme de l'ensemble des pourcentages molaires des composants présents dans ladite composition étant égale à 100.

2. Composition selon la revendication 1, **caractérisée en ce qu'**elle présente une transparence dans l'infrarouge, notamment dans les longueurs d'ondes allant de 0,7 à 14 µm et en particulier allant de 0,7 à 11 µm ou de 0,9 à 14 µm.

3. Composition selon la revendication 1 ou 2, **caractérisée en ce qu'**elle comprend au moins 0,1 % de volume cristallisé avec des cristaux de taille inférieure ou égale à 1 µm.

4. Composition selon la revendication 3, **caractérisée en ce que** les cristaux possèdent une taille moyenne inférieure ou égale à 500 nm, en particulier inférieure à 400 nm, voire inférieure ou égale à 300 nm.

5. Composition selon la revendication 3 ou 4, **caractérisée en ce que** les cristaux possèdent une taille moyenne supérieure ou égale à 1 nm, notamment supérieure ou égale à 2 nm, et en particulier supérieure ou égale à 5 nm.

6. Composition selon l'une quelconque des revendications 3 à 5, **caractérisée en ce que** les cristaux possèdent une taille variant de 10 à 300 nm, et en particulier de 50 à 300 nm.

7. Composition vitreuse non cristalline comprenant, en % molaire :
| | |
|---|---|
| Ge | 5-40 |
| Ga | <1 |
| S+Se | 40-85 |
| Sb+As | 4-40 |
| MX | 2-25 |
| Ln | 0-6 |
| Adjuvant | 0-30 |
dans laquelle :
- M représente au moins Zn ou un métal alcalin choisi parmi Rb, Cs, Na et K,
- X représente au moins un atome de chlore, brome ou iode,
- Ln représente au moins une terre rare,
- Adjuvant représente au moins un additif constitué par au moins un métal et/ou au moins un sel métallique,
avec la somme de l'ensemble des pourcentages molaires des composants présents dans ladite composition étant égal à 100.

8. Composition selon l'une quelconque des revendications 1 à 7, **caractérisée en ce qu'**elle comprend du gallium en une teneur inférieure ou égale à 0,75 % molaire, notamment inférieure ou égale à 0,5 % molaire, en particulier inférieure ou égale à 0,25 % molaire, voire inférieure ou égale à 0,1 % molaire.

9. Composition selon l'une des revendications 1 à 8, **caractérisée en ce qu'**elle est exempte de gallium.

10. Composition selon l'une quelconque des revendications précédentes, **caractérisée en ce que** la teneur en germanium varie de 10 à 35 % molaire.

11. Composition selon l'une quelconque des revendications précédentes, **caractérisée en ce que** la teneur en soufre et/ou sélénium varie de 45 à 75 % molaire, et notamment de 50 à 75% molaire.

12. Composition selon l'une quelconque des revendications précédentes, **caractérisée en ce que** la teneur en antimoine et/ou arsenic varie de 4 à 25% molaire, et notamment de 8 à 20 % molaire.

13. Composition selon l'une quelconque des revendications précédentes, **caractérisée en ce que** la teneur en composé MX varie de 2 à 15 % molaire.

14. Composition selon l'une quelconque des revendications précédentes, **caractérisée en ce que** la teneur en terre rare varie de 0 à 3 % molaire.

15. Composition selon l'une quelconque des revendications précédentes, **caractérisée en ce que** la teneur en adjuvant varie de 0 à 10 % molaire.

16. Composition selon l'une quelconque des revendications précédentes, **caractérisée en ce que** Ln représente au moins une terre rare choisie parmi Dy, Er, Nd, Pr, Yb, Tm, Ho et leurs mélanges.

17. Composition selon l'une quelconque des revendications précédentes, **caractérisée en ce que** l'adjuvant est choisi parmi Ca, Ba, In, Te, Pb, Cu, Ag, Cd, leurs sels, comme par exemple Cul et PbI₂, et leurs dérivés par exemple Ag₂Se et CdTe, et leurs mélanges.

18. Composition selon l'une quelconque des revendications 1 à 17, **caractérisée en ce qu'**il s'agit d'un mélange quaternaire de germanium en une teneur variant de 15 à 30 % molaire, d'antimoine en une teneur variant de 4 à 20 % molaire, de sélénium en une teneur variant de 50 à 70 % molaire et d'halogénure de césium, tel que CsCl, CsBr ou Csl, en une teneur variant de 3 à 15 % molaire.

19. Composition selon l'une quelconque des revendications 1 à 17, **caractérisée en ce qu'**il s'agit d'un mélange quaternaire de germanium en une teneur variant de 15 à 20 % molaire, d'antimoine en une teneur variant de 10 à 15 % molaire, de soufre en une teneur variant de 45 à 65 % molaire et d'halogénure de césium, tel que CsCl, CsBr ou Csl, en une teneur variant de 2 à 15 % molaire.

20. Composition selon l'une quelconque des revendications 1 à 17, **caractérisée en ce qu'**il s'agit d'un mélange à cinq composants, de germanium en une teneur allant de 10 à 25 % molaire, d'antimoine en une teneur allant de 10 à 25 % molaire, de sélénium en une teneur allant de 55 à 65 % molaire, d'halogénure de césium, tel que CsCl, CsBr ou Csl en une teneur allant de 2 à 5 % molaire, et d'un adjuvant choisi parmi Pbl₂, Cul, Ag₂Se et CdTe en une teneur allant de 1 à 7 % molaire.

21. Procédé d'obtention d'une composition de type vitrocéramique selon l'une quelconque des revendications 1 à 6 et 8 à 20, **caractérisée en ce qu'**elle comprend le traitement thermique d'une composition vitreuse selon la revendication 7 à 20 à une température et pendant une durée suffisantes pour générer des cristaux d'une taille inférieure à 1 µm, notamment inférieure ou égale à 500 nm, en particulier inférieure ou égale à 400 nm, voire inférieure ou égale à 300 nm.

22. Utilisation d'une composition de type vitrocéramique telle que définie selon l'une quelconque des revendications 1 à 6 et 8 à 20 dans un système infrarouge fonctionnant dans une gamme de longueur d'onde allant de 0,7 à 14 µm et en particulier allant de 0,7 à 11 µm ou de 0,9 à 14 µm, notamment dans des imageurs thermiques fonctionnant de 3 à 5 µm et/ou de 8 à 12 µm.

## Claims

1. A composition of vitroceramic type including crystals and comprising, in mol%:
| | |
|---|---|
| Ge | 5-40 |
| Ga | <1 |
| S + Se | 40-85 |
| Sb + As | 4-40 |
| MX | 2-25 |
| Ln | 0-6 |
| Adjuvant | 0-30 |
in which:
M represents at least Zn or one alkali metal chosen from Rb, Cs, Na, and K,
X represents at least one chlorine, bromine or iodine atom,
Ln represents at least one rare earth metal, and
Adjuvant represents at least one additive composed of at least one metal and/or at least one metal salt,
with the sum of the combination of the molar percentages of the components present in said composition being equal to 100.

2. The composition as claimed in claim 1, **characterized in that** it exhibits a transparency in the infrared, namely in wavelengths extending from 0.7 to 14 µm and in particular from 0.7 to 11 µm or from 0.9 to 14 µm.

3. The composition as claimed in claim 1 or 2, **characterized in that** it comprises at least 0.1 % of crystallized volume with crystals with a size of less than or equal to 1 µm.

4. The composition as claimed in claim 3, **characterized in that** the crystals have a mean size of less than or equal to 500 nm, in particular less than 400 nm, or even less than or equal to 300 nm.

5. The composition as claimed in claim 3 or 4, **characterized in that** the crystals have a mean size of greater than or equal to 1 nm, namely greater than or equal to 2 nm, and in particular greater than or equal to 5 nm.

6. The composition as claimed in any one of claims 3 to 5, **characterized in that** the crystals have a size varying from 10 to 300 nm, and in particular from 50 to 300 nm.

7. A noncrystalline vitreous composition comprising, in mol%:
| | |
|---|---|
| Ge | 5-40 |
| Ga | <1 |
| S+Se | 40-85 |
| Sb + As | 4-40 |
| MX | 2-25 |
| Ln | 0-6 |
| Adjuvant | 0-30 |
in which:
- M represents at least Zn or one alkali metal chosen from Rb, Cs, Na and K,
- X represents at least one chlorine, bromine or iodine atom,
- Ln represents at least one rare earth metal,
- Adjuvant represents at least one additive composed of at least one metal and/or at least one metal salt,
with the sum of the combination of the molar percentages of the components present in said composition being equal to 100.

8. The composition as claimed in any one of claims 1 to 7, **characterized in that** it comprises gallium in a content of less than or equal to 0.75 mol%, namely less than or equal to 0.5 mol%, in particular less than or equal to 0.25 mol%, or even less than or equal to 0.1 mol%.

9. The composition as claimed in any one of claims 1 to 8, **characterized in that** it is devoid of gallium.

10. The composition as claimed in any preceding claims, **characterized in that** the content of germanium varies from 10 to 35 mol%.

11. The composition as claimed in any preceding claims, **characterized in that** the content of sulfur and/or selenium varies from 45 to 75 mol%, and namely from 50 to 75 mol%.

12. The composition as claimed in any of preceding claims, **characterized in that** the content of antimony and/or arsenic varies from 4 to 25 mol%, and namely from 8 to 20 mol%.

13. The composition as claimed in any preceding claims, **characterized in that** the content of compound MX varies from 2 to 15 mol%.

14. The composition as claimed in any preceding claims, **characterized in that** the content of rare earth metal varies from 0 to 3 mol%.

15. The composition as claimed in any preceding claims, **characterized in that** the content of adjuvant varies from 0 to 10mol%.

16. The composition as claimed in any preceding claims, **characterized in that** Ln represents at least one rare earth metal chosen from Dy, Er, Nd, Pr, Yb, Tm, Ho and their mixtures.

17. The composition as claimed in any preceding claims, **characterized in that** the adjuvant is chosen from Ca, Ba, In, Te, Pb, Cu, Ag, Cd, their salts, as for example Cul and Pbl₂, and their derivatives, for example AG₂Se and CdTe and their mixtures.

18. The composition as claimed in any one of claims 1 to 17, **characterized in that** it is a quaternary mixture of germanium in a content varying from 15 to 30 mol%, of antimony in a content varying from 4 to 20 mol%, of selenium in a content varying from 50 to 70 mol% and of cesium halide, such as CsCl, CsBr or Csl, in a content varying from 3 to 15 mol%.

19. The composition as claimed in any one of claims 1 to 17, **characterized in that** it is a quaternary mixture of germanium in a content varying from 15 to 20 mol%, of antimony in a content varying from 10 to 15 mol%, of sulfur in a content varying from 45 to 65 mol% and of cesium halide, such as CsCl, CsBr or Csl, in a content varying from 2 to 15 mol%.

20. The composition as claimed in any one of claims 1 to 17, **characterized in that** it is a five-component mixture of germanium in a content extending from 10 to 25 mol%, of antimony in a content extending from 10 to 25 mol%, of selenium in a content extending from 55 to 65 mol%, of cesium halide, such as CsCl, CsBr or Csl, in a content extending from 2 to 5 mol% and of an adjuvant chosen from Pb₂, Cul, Ag₂Se and CdTe in a content extending from 1 to 7 mol%.

21. A process for the preparation of a composition of vitroceramic type as claimed in any one of claims 1 to 6 and 8 to 20, **characterized in that** it comprises the heat treatment of a vitreous composition as claimed in claims 7 to 20 at a temperature and for a period of time sufficient to produce crystals with a size of less than 1 µm, namely less than or equal to 500 nm, particularly less than or equal to 400nm, in particular less than or equal to 500 nm, in particular less than or equal to 400 nm, or even less than or equal to 300 nm.

22. The use of a composition of vitroceramic type as defined in any one of claims 1 to 6 and 8 to 20, in an infrared system operating in a wavelength range extending from 0.7 to 14 µm and in particular from 0.7 to 11 µm or 0.9 to 14 µm, namely in thermo images operating from 3 to 5 µm and/or from 8 to 12 µm

## Patentansprüche

1. Zusammensetzung vom glaskeramischen Typ, die Kristalle umfasst und einen Anteil in Molprozent aufweist an:
| | |
|---|---|
| Ge | 5-40 |
| Ga | <1 |
| S+Se | 40-85 |
| Sb+As | 4-40 |
| MX | 2-25 |
| Ln | 0-6 |
| Zusatzmittel | 0-30 |
bei der:
- M wenigstens für Zn oder ein Alkalimetall aus Rb, Cs, Na und K steht,
- X wenigstens für ein Chlor-, Brom- oder Iodatom steht,
- Ln wenigstens für eine seltene Erde steht,
- das Zusatzmittel wenigstens für ein Additiv steht, das wenigstens durch ein Metall und/oder Metallsalz gebildet ist,
wobei die Summe aller Molprozente der in der Zusammensetzung vorhandenen Komponenten gleich 100 ist.

2. Zusammensetzung nach Anspruch 1,
**dadurch gekennzeichnet, dass** sie eine Infrarottransparenz insbesondere im Wellenlängenbereich zwischen 0,7 und 14 µm und besonders zwischen 0,7 bis 11 µm oder zwischen 0,9 bis 14 µm aufweist.

3. Zusammensetzung nach Anspruch 1 oder 2,
**dadurch gekennzeichnet, dass** sie wenigstens 0,1 Vol.-% in kristalliner Form mit Kristallen kleiner oder gleich 1 µm umfasst.

4. Zusammensetzung nach Anspruch 3,
**dadurch gekennzeichnet, dass** die Kristalle eine durchschnittliche Größe von kleiner oder gleich 500 nm, insbesondere kleiner 400 nm, sogar kleiner oder gleich 300 nm haben.

5. Zusammensetzung nach Anspruch 3 oder 4,
**dadurch gekennzeichnet, dass** die Kristalle eine durchschnittliche Größe von größer oder gleich 1 nm, insbesondere größer oder gleich 2 nm, und insbesondere größer oder gleich 5 nm haben.

6. Zusammensetzung nach einem der Ansprüche 3 bis 5,
**dadurch gekennzeichnet, dass** die Kristalle eine Größe von 10 bis 300 nm und insbesondere von 50 bis 300 nm haben.

7. Glasartige, nicht kristalline Zusammensetzung, die einen Anteil in Molprozent aufweist an
| | |
|---|---|
| Ge | 5-40 |
| Ga | <1 |
| S+Se | 40-85 |
| Sb+As | 4-40 |
| MX | 2-25 |
| Ln | 0-6 |
| Zusatzmittel | 0-30 |
bei der:
- M wenigstens für Zn oder ein Alkalimetall aus Rb, Cs, Na und K steht,
- X wenigstens für ein Chlor-, Brom- oder Iodatom steht,
- Ln wenigstens für eine seltene Erde steht,
- das Zusatzmittel wenigstens für ein Additiv steht, das wenigstens durch ein Metall und/oder Metallsalz gebildet ist,
wobei die Summe aller Molprozente der in der Zusammensetzung vorhandenen Komponenten gleich 100 ist

8. Zusammensetzung nach einem der Ansprüche 1 bis 7,
**dadurch gekennzeichnet, dass** sie Gallium mit einem Anteil von kleiner oder gleich 0,75 Molprozent, insbesondere kleiner oder gleich 0,5 Molprozent, besonders kleiner oder gleich 0,25 Molprozent, sogar kleiner oder gleich 0,1 Molprozent umfasst.

9. Zusammensetzung nach einem der Ansprüche 1 bis 8,
**dadurch gekennzeichnet, dass** sie galliumfrei ist.

10. Zusammensetzung nach einem der vorhergehende Ansprüche,
**dadurch gekennzeichnet, dass** der Anteil an Germanium zwischen 10 und 35 Molprozent liegt.

11. Zusammensetzung nach einem der vorhergehende Ansprüche,
**dadurch gekennzeichnet, dass** der Anteil an Schwefel und/oder Selen zwischen 45 und 75 Molprozent und insbesondere zwischen 50 und 75 Molprozent liegt.

12. Zusammensetzung nach einem der vorhergehende Ansprüche,
**dadurch gekennzeichnet, dass** der Anteil an Antimon und/oder Arsen zwischen 4 und 25 Molprozent und insbesondere zwischen 8 und 20 Molprozent liegt.

13. Zusammensetzung nach einem der vorhergehende Ansprüche,
**dadurch gekennzeichnet, dass** der Anteil der MX-Verbindung zwischen 2 und 15 Molprozent liegt.

14. Zusammensetzung nach einem der vorhergehende Ansprüche,
**dadurch gekennzeichnet, dass** der Anteil an seltener Erde zwischen 0 und 3 Molprozent liegt.

15. Zusammensetzung nach einem der vorhergehende Ansprüche,
**dadurch gekennzeichnet, dass** der Anteil des Zusatzmittels zwischen 0 und 10 Molprozent liegt.

16. Zusammensetzung nach einem der vorhergehende Ansprüche,
**dadurch gekennzeichnet, dass** Ln wenigstens für eine seltene Erde gewählt aus Dy, Er, Nd, Pr, Yb, Tm, Ho und deren Gemische steht.

17. Zusammensetzung nach einem der vorhergehende Ansprüche,
**dadurch gekennzeichnet, dass** das Zusatzmittel gewählt ist aus Ca, Ba, In , Te, Pb, Cu, Ag, Cd, deren Salze, wie zum Beispiel CuI und PbI₂, und deren Derivate wie zum Beispiel Ag₂Se und CdTe und deren Gemische.

18. Zusammensetzung nach einem der Ansprüche 1 bis 17,
**dadurch gekennzeichnet, dass** es sich um ein quarternäres Gemisch aus Germanium mit einem Anteil zwischen 15 und 30 Molprozent, Antimon mit einem Anteil zwischen 4 und 20 Molprozent, Selen mit einem Anteil zwischen 50 und 70 Molprozent und Cäsiumhalogeniden wie zum Beispiel CsCl, CsBr oder CsI mit einem Anteil zwischen 3 und 15 Molprozent handelt.

19. Zusammensetzung nach einem der Ansprüche 1 bis 17,
**dadurch gekennzeichnet, dass** es sich um ein quarternäres Gemisch aus Germanium mit einem Anteil zwischen 15 und 20 Molprozent, Antimon mit einem Anteil zwischen 10 und 15 Molprozent, Schwefel mit einem Anteil zwischen 45 und 65 Molprozent und Cäsiumholgeniden wie zum Beispiel CsCl, CsBr oder CsI mit einem Anteil zwischen 2 und 15 Molprozent handelt.

20. Zusammensetzung nach einem der Ansprüche 1 bis 17,
**dadurch gekennzeichnet, dass** es sich um ein Fünfkomponentengemisch aus Germanium mit einem Anteil von 10 bis 25 Molprozent, Antimon mit einem Anteil von 10 bis 25 Molprozent, Selen mit einem Anteil von 55 bis 65 Molprozent, Cäsiumhalogeniden wie zum Beispiel CsCl, CsBr oder CsI mit einem Anteil von 2 bis 5 Molprozent und einem Zusatzmittel aus PbI₂, CuI, Ag₂Se und CdTe mit einem Anteil von 1 bis 7 Molprozent handelt.

21. Verfahren zur Erlangung einer Zusammensetzung vom glaskeramischen Typ nach einem der Ansprüche 1 bis 6 und 8 bis 20,
**dadurch gekennzeichnet, dass** sie die Wärmebehandlung einer glasartigen Zusammensetzung nach Anspruch 7 bis 20 bei einer Temperatur und für eine Zeitdauer umfasst, die ausreicht, um Kristalle mit einer Größe von kleiner 1 µm, insbesondere kleiner oder gleich 500 nm, besonders kleiner oder gleich 400 nm, sogar kleiner oder gleich 300 nm zu erzeugen.

22. Verwendung einer Zusammensetzung vom glaskeramischen Typ wie definiert nach einem der Ansprüche 1 bis 6 und 8 bis 20 in einem Infrarotsystem, das in einem Wellenlängenbereich zwischen 0,7 und 14 µm und besonders zwischen 0,7 und 11 µm oder 0,9 und 14 µm arbeitet, insbesondere in Wärmebildgeräten, die in einem Bereich zwischen 3 und 5 µm und/oder 8 und 12 µm arbeiten.
